# EUROPÄISCHE PATENTSCHRIFT

(11) **EP 4 019 738 B1**
(45) Veröffentlichungstag und Bekanntmachung des Hinweises auf die Patenterteilung: **31.12.2025**
(21) Anmeldenummer: 21209619.2
(22) Anmeldetag: 22.11.2021
(51) Int. Cl.: F01C 1/22, F01C 20/04, F01C 21/18, F17D 1/04, F02B 53/00

(54) **KOLBENGEHÄUSE, ROTATIONSKOLBENMASCHINE, GASDRUCK- REGELSYSTEM UND VERFAHREN ZUM BETREIBEN DES GASDRUCK- REGELSYSTEMS**
PISTON HOUSING, ROTARY PISTON ENGINE, GAS PRESSURE CONTROL SYSTEM AND METHOD FOR OPERATING THE GAS PRESSURE CONTROL SYSTEM
CARTER DE PISTON, MACHINE À PISTON ROTATIF, SYSTÈME DE RÉGULATION DE LA PRESSION DE GAZ ET PROCÉDÉ DE FONCTIONNEMENT DU SYSTÈME DE RÉGULATION DE LA PRESSION DE GAZ

(30) Priorität: 23.12.2020 DE 102020134882
(43) Veröffentlichungstag der Anmeldung: 29.06.2022
(73) Patentinhaber: Westenergie AG, 45128 Essen (DE)
(72) Erfinder: Schaarschmidt, Gunnar, 45770 Marl (DE); Lenth, Burkhard, 44575 Castrop-Rauxel (DE)
(74) Vertreter: Bals & Vogel Patentanwälte PartGmbB

(56) Entgegenhaltungen:
- WO-A1-03/076779
- GB-A- 1 562 861
- US-A1- 2009 228 191
- US-A1- 2012 288 391
- US-B1- 6 668 769

## Beschreibung

Die vorliegende Erfindung betrifft ein Kolbengehäuse für eine Rotationskolbenmaschine zum Regeln von unterschiedlichen Gasdrücken in einem Gasleitungsnetz, aufweisend einen ersten Gehäuseteil mit einer kreissegmentförmigen Innenkontur und einen zweiten Gehäuseteil mit einer kreissegmentförmigen Innenkontur, wobei der erste Gehäuseteil und der zweite Gehäuseteil zusammen eine Gehäuseinnenwandung mit einer trochoidenförmigen Gehäuseinnenkontur zum Definieren eines Gehäusevolumens für einen darin rotierbaren dreieckigen Rotationskolben der Rotationskolbenmaschine bilden. Die Erfindung betrifft ferner eine Rotationskolbenmaschine mit einem solchen Kolbengehäuse, ein Gasdruck-Regelsystem mit einer solchen Rotationskolbenmaschine sowie ein Verfahren zum Betreiben eines solchen Gasdruck-Regelsystems.

In der europäischen Patentanmeldung EP 3 091 176 A1 wird eine vom Wankelmotor inspirierte Rotationskolbenmaschine zum Regeln von unterschiedlichen Gasdrücken in einem Gasleitungsnetz beschrieben. Die Rotationskolbenmaschine ist gleichermaßen geeignet, Niederdruckgas in einem Kompressionsbetrieb zu verdichten oder Hochdruckgas in einem Expansionsbetrieb zu entspannen. Dabei vereint die Rotationskolbenmaschine durch ihre spezielle Bauart die Vorteile von Kolbenmaschinen und Turbinen.

Weitere ähnliche Rotationskolbenmaschinen sind in US2012/288391A1 und GB1562861A offenbart.

Ein Wankelmotor ist eine Verbrennungsmaschine, die ihre Rotationsenergie aus der Ausdehnung des verbrennenden Treibstoff-Luft-Gemischs bezieht. Ein Zyklus von Ansaugen, Verdichten, Verbrennen bzw. Entspannen und Ausstoßen wird im Rahmen einer vollständigen Umdrehung des Rotationskolbens um 360° durchgeführt. Die in der EP 3 091 176 A1 beschriebene Rotationskolbenmaschine sieht dem Wankelmotor zwar ähnlich und weist auch ein ähnliches Funktionsmuster auf, ist aber keine Verbrennungsmaschine. Im Kompressionsbetrieb ist der Zyklus bereits nach dem Verdichten, also nach 180° abgeschlossen. Die erforderliche Rotationsenergie muss extern über eine Welle zugeführt werden. Der Expansionsbetrieb benötigt für das Entspannen und das Ausstoßen ebenfalls nur 180°. Die der Energie des Arbeitsgases bzw. Hochdruckgases entzogene mechanische Arbeit wird als Rotationsenergie an die Welle abgegeben. Die Rotationskolbenmaschine nutzt demnach unter Beibehaltung der Drehrichtung im Kompressionsbetrieb nur die ersten 180° und im Expansionsbetrieb die zweiten 180°. Da sich beide Betriebsmodi gegenseitig ausschließen, laufen die jeweils anderen 180° leer.

Aufgabe der vorliegenden Erfindung ist es, der voranstehend beschriebenen Problematik zumindest teilweise Rechnung zu tragen. Insbesondere ist es Aufgabe der vorliegenden Erfindung, eine gattungsgemäße Rotationskolbenmaschine mit Verbesserungen hinsichtlich einer möglichst effizienten und/oder stabilen Betriebsweise zu schaffen.

Die voranstehende Aufgabe wird durch die Patentansprüche gelöst. Insbesondere wird die voranstehende Aufgabe durch das Kolbengehäuse gemäß Anspruch 1, die Rotationskolbenmaschine gemäß Anspruch 4, das Gasdruck-Regelsystem gemäß Anspruch 10 sowie das Verfahren gemäß Anspruch 11 gelöst. Weitere Vorteile der Erfindung ergeben sich aus den Unteransprüchen, der Beschreibung und den Figuren. Dabei gelten Merkmale, die im Zusammenhang mit dem Kolbengehäuse beschrieben sind, selbstverständlich auch im Zusammenhang mit der erfindungsgemäßen Rotationskolbenmaschine, dem erfindungsgemäßen Gasdruck-Regelsystem, dem erfindungsgemäßen Verfahren und jeweils umgekehrt, sodass bezüglich der Offenbarung zu den einzelnen Erfindungsaspekten stets wechselseitig Bezug genommen wird und/oder werden kann.

Gemäß einem ersten Aspekt der vorliegenden Erfindung wird ein Kolbengehäuse für eine Rotationskolbenmaschine zum Regeln von unterschiedlichen Gasdrücken in einem Gasleitungsnetz zur Verfügung gestellt. Das Kolbengehäuse weist einen ersten Gehäuseteil mit einer kreissegmentförmigen Innenkontur und einen zweiten Gehäuseteil mit einer kreissegmentförmigen Innenkontur auf, wobei der erste Gehäuseteil und der zweite Gehäuseteil zusammen eine Gehäuseinnenwandung mit einer trochoidenförmigen Gehäuseinnenkontur zum Definieren eines Gehäusevolumens für einen darin rotierbaren dreieckigen Rotationskolben der Rotationskolbenmaschine bilden. Am ersten Gehäuseteil sind eine erste Hochdrucköffnung zum Einlassen von Hochdruckgas in das Gehäusevolumen sowie zum Auslassen von Hochdruckgas aus dem Gehäusevolumen und eine erste Niederdrucköffnung zum Einlassen von Niederdruckgas in das Gehäusevolumen sowie zum Auslassen von Niederdruckgas aus dem Gehäusevolumen konfiguriert. Am zweiten Gehäuseteil sind eine zweite Hochdrucköffnung zum Einlassen von Hochdruckgas in das Gehäusevolumen sowie zum Auslassen von Hochdruckgas aus dem Gehäusevolumen und eine zweite Niederdrucköffnung zum Einlassen von Niederdruckgas in das Gehäusevolumen sowie zum Auslassen von Niederdruckgas aus dem Gehäusevolumen konfiguriert. Die erste Hochdrucköffnung und die zweite Hochdrucköffnung sind zum gegenläufigen Einlassen des Hochdruckgases in das Gehäusevolumen konfiguriert und die erste Niederdruck-Gasöffnung und die zweite Niederdrucköffnung sind zum gegenläufigen Einlassen des Niederdruckgases in das Gehäusevolumen konfiguriert.

Die erfindungsgemäße Verbesserung besteht demnach insbesondere darin, die Gaseinlässe und die Gasauslässe bzw. die entsprechenden Hoch- und Niederdruckleitungen des Kolbengehäuses dahingehend anzuordnen, dass die in der Beschreibungseinleitung beschriebenen, leerlaufenden 180° eines Rotationskolbens im Gehäusevolumen mitgenutzt werden können. Damit können in einem zugehörigen System insbesondere Verbesserungen hinsichtlich Thermodynamik und Mechanik erreicht werden. Im Kompressionsbetrieb wird aus einer bislang ungenutzten Niederdrucköffnung ein zweiter Niederdruckgas-Einlass bzw. die zweite Niederdrucköffnung gemacht. Aus einer bislang ungenutzten Hochdrucköffnung wird ein zweiter Hochdruckgas-Auslass bzw. die zweite Hochdrucköffnung gemacht. Analog wird im Expansionsbetrieb aus einer bislang ungenutzten Niederdrucköffnung ein zweiter Niederdruckgas-Auslass bzw. die zweite Niederdrucköffnung gemacht. Aus einer bislang ungenutzten Hochdrucköffnung wird ein zweiter Hochdruckgas-Einlass bzw. die zweite Hochdrucköffnung gemacht. Dies ermöglicht eine Rotationskolbenmaschine, die im Vergleich zu der eingangs erwähnten Rotationskolbenmaschine des Standes der Technik bei gleichbleibender Größe in beiden Betriebsmodi, also im Expansionsbetrieb sowie im Kompressionsbetrieb, den doppelten Volumenstrom und eine entsprechend höhere Effizienz erreicht.

Unter dem dreieckigen Rotationskolben kann ein Rotationskolben mit im Querschnitt betrachteten drei Ecken bzw. drei zugehörigen Seitenkanten, wie er auch in Wankelmotoren zum Einsatz kommt, verstanden werden. Das Kolbengehäuse und/oder das Gehäusevolumen weist eine zum Rotationskolben korrespondierende Höhe auf, die der Höhe bzw. der Dicke des Rotationskolbens entspricht oder nur geringförmig höher als der Rotationskolben ist. Unter dem Kolbengehäuse muss kein Gehäuse mit einem abgeschlossenen Gehäusevolumen verstanden werden. Vielmehr kann das Gehäusevolumen in einer Umfangsrichtung durch die Innenkontur bzw. eine entsprechende Innenumfangsfläche des Kolbengehäuses umschlossen und zu einer Oberseite und einer Unterseite des Gehäusevolumens geöffnet bzw. unbedeckt sein. So wird das Gehäusevolumen insbesondere durch die trochoidenförmige Gehäuseinnenkontur definiert. Gleichwohl kann das Kolbengehäuse zwei Deckplatten zum Bedecken von wenigstens einem Teil der Oberseite und von wenigstens einem Teil der Unterseite des Gehäusevolumens aufweisen.

Darunter, dass die erste Hochdrucköffnung und die zweite Hochdrucköffnung zum gegenläufigen Einlassen des Hochdruckgases in das Gehäusevolumen ausgestaltet sind, kann verstanden werden, dass die Position der ersten Hochdrucköffnung und die Position der zweiten Hochdrucköffnung im Kolbengehäuse und/oder am Gehäusevolumen dahingehend gewählt sind, dass das Hochdruckgas während eines vollständigen Kompressionsbetriebs, bei welchem sich der Rotationskolben um 360° dreht bzw. drehen soll, zum gemeinsamen Antreiben des Rotationskolbens gegenläufig, insbesondere abwechselnd gegenläufig, in das Gehäusevolumen geführt werden kann. Analog kann darunter, dass die erste Niederdrucköffnung und die zweite Niederdrucköffnung zum gegenläufigen Einlassen des Niederdruckgases in das Gehäusevolumen ausgestaltet sind, verstanden werden, dass die Position der ersten Niederdrucköffnung und die Position der zweiten Niederdrucköffnung im Kolbengehäuse und/oder am Gehäusevolumen dahingehend gewählt sind, dass das Niederdruckgas während des vollständigen Kompressionsbetriebs gegenläufig, insbesondere gleichzeitig gegenläufig, in das Gehäusevolumen geführt werden kann. Analog können die erste Hochdrucköffnung und die zweite Hochdrucköffnung zum gegenläufigen, insbesondere zum abwechselnd gegenläufigen, Auslassen des Hochdruckgases aus dem Gehäusevolumen ausgestaltet sein und die erste Niederdrucköffnung und die zweite Niederdrucköffnung können zum gegenläufigen, insbesondere zum gleichzeitig gegenläufigen, Auslassen des Niederdruckgases aus dem Gehäusevolumen ausgestaltet sein.

Unter der Gegenläufigkeit kann ein bidirektionales Leiten des jeweiligen Gases über die Zeit einer vollständigen Umdrehung eines Rotationskolbens während eines Betriebs der Rotationskolbenmaschine verstanden werden. In einem Expansionsbetrieb kann das Niederdruckgas beispielsweise kontinuierlich, gleichzeitig aus der ersten Niederdrucköffnung und aus der zweiten Niederdrucköffnung aus dem Gehäusevolumen geleitet werden. Bei einer Wellenposition von beispielsweise 5° kann Hochdruckgas durch die zweite Hochdrucköffnung in einer Hochdruckgaseinlassrichtung in das Gehäusevolumen geleitet werden, während die erste Hochdrucköffnung verschlossen ist. Dabei wird der Rotationskolben durch das Hochdruckgas im Gehäusevolumen gedreht. Kurz darauf kann die zweite Hochdrucköffnung geschlossen werden, sodass sich das nun im Gehäusevolumen befindliche Hochdruckgas entspannen und durch die Niederdrucköffnungen als Niederdruckgas ausgelassen werden kann. Kurz darauf, wenn die Wellenposition beispielsweise ca. 25° erreicht, kann die erste Hochdrucköffnung geöffnet werden, während die zweite Hochdrucköffnung weiterhin verschlossen bleibt. Nun kann Hochdruckgas durch die erste Hochdrucköffnung in einer Hochdruckgaseinlassrichtung, die entgegengesetzt zur Hochdruckgaseinlassrichtung des Hochdruckgases durch die zweite Hochdrucköffnung bei der Wellenposition von 5°, also gegenläufig, ist, in das Gehäusevolumen geleitet werden. Ein entsprechender Prozess wird später mit Bezug auf die Figuren im weiteren Detail beschrieben.

Unter dem Gasleitungsnetz kann ein Gasleitungsnetz zum Leiten von beispielsweise Erdgas an verschiedene Haushalte verstanden werden. Die Niederdrucköffnungen und die Hochdrucköffnungen können als an das Gehäusevolumen angrenzende Endabschnitte zugehöriger Gasleitungen verstanden werden. So können die erste Hochdrucköffnung in einem Endabschnitt einer ersten Hochdruckleitung im Kolbengehäuse, die zweite Hochdrucköffnung in einem Endabschnitt einer zweiten Hochdruckleitung im Kolbengehäuse, die erste Niederdrucköffnung in einem Endabschnitt einer ersten Niederdruckleitung im Kolbengehäuse und die zweite Niederdrucköffnung in einem Endabschnitt einer zweiten Niederdruckleitung im Kolbengehäuse verstanden werden. Die Hochdruckleitungen und die Niederdruckleitungen können sich parallel und/oder schräg zueinander erstrecken. Für eine möglichst kompakte Ausgestaltung des Kolbengehäuses kann es hilfreich sein, wenn sich die Hochdruckleitungen und die Niederdruckleitungen im Kolbengehäuse schräg zueinander erstrecken.

Gemäß einer zweiten Ausführungsform der vorliegenden Erfindung ist es möglich, dass bei einem Kolbengehäuse die kreissegmentförmige Innenkontur des ersten Gehäuseteils ein erstes Zentrum aufweist, die kreissegmentförmige Innenkontur des zweiten Gehäuseteils ein zweites Zentrum aufweist und die trochoidenförmige Gehäuseinnenkontur ein Hauptzentrum aufweist, wobei die erste Hochdrucköffnung eine Exzentrizität zum ersten Zentrum in Richtung des Hauptzentrums aufweist, die erste Niederdrucköffnung eine Exzentrizität zum ersten Zentrum in einer Richtung weg vom Hauptzentrums aufweist, die zweite Hochdrucköffnung eine Exzentrizität zum zweiten Zentrum in Richtung des Hauptzentrums aufweist, und/oder die zweite Niederdrucköffnung eine Exzentrizität zum zweiten Zentrum in einer Richtung weg vom Hauptzentrum aufweist. Damit konnte bei umfangreichen Versuchen im Rahmen der vorliegenden Erfindung ein besonders effizienter Betrieb einer das Kolbengehäuse verwendenden Rotationskolbenmaschine erreicht werden.

Weiterhin hat es sich bei einem erfindungsgemäßen Kolbengehäuse als vorteilhaft herausgestellt, wenn der Querschnitt der Hochdrucköffnungen jeweils kleiner als der Querschnitt der Niederdrucköffnungen ist. Insbesondere kann der Querschnitt der ersten Hochdrucköffnung gleich dem Querschnitt der zweiten Hochdrucköffnung sein und der Querschnitt der ersten Niederdrucköffnung kann gleich dem Querschnitt der zweiten Niederdrucköffnung sein, wobei der Querschnitt der ersten Hochdrucköffnung und der zweiten Hochdrucköffnung jeweils kleiner als der Querschnitt der ersten Niederdrucköffnung und der zweiten Niederdrucköffnung ist. Während eines Betriebs der Rotationskolbenmaschine strömt durch die Hochdrucköffnungen Hochdruckgas, das einen höheren Druck als das Niederdruckgas an den Niederdrucköffnungen aufweist und damit bei gleichem Gasmassenstrom ein geringeres Leitungsvolumen erfordert. Ansonsten könnten Strömungs- und/oder Kräfteungleichgewichte an und/oder in der Rotationskolbenmaschine sowie am und/oder im Kolbengehäuse resultieren. Durch Ausgestaltung der unterschiedlichen Querschnitte kann dies verhindert werden. Unter dem Querschnitt kann die Querschnittsfläche und/oder die Fläche der jeweiligen Öffnung verstanden werden.

Gemäß einem weiteren Aspekt der vorliegenden Erfindung wird eine Rotationskolbenmaschine zum Regeln von unterschiedlichen Gasdrücken in einem Gasleitungsnetz durch einen Kompressionsbetrieb zum Komprimieren von Niederdruckgas in Hochdruckgas und durch einen Expansionsbetrieb zum Expandieren von Hochdruckgas in Niederdruckgas zur Verfügung gestellt. Die Rotationskolbenmaschine weist einen dreieckigen Rotationskolben, eine Exzenterwelle mit einem Exzenter und ein wie vorstehend beschriebenes Kolbengehäuse auf, wobei der Rotationskolben rotierbar im Gehäusevolumen auf dem Exzenter positioniert ist. Damit bringt die erfindungsgemäße Rotationskolbenmaschine die gleichen Vorteile mit sich, wie sie ausführlich mit Bezug auf das erfindungsgemäße Kolbengehäuse beschrieben worden sind. Die Rotationskolbenmaschine weist vorzugsweise ein Zahnungs- und/oder Übersetzungsverhältnis von 2:3 von einem Ritzel der Rotationskolbenmaschine zu einem Hohlrad der Rotationskolbenmaschine auf. Der Rotationskolben weist drei Kolbenecken bzw. Kolbenkanten auf, an welchen vorzugsweise Dichtlippen für einen Schleifkontakt an der Gehäuseinnenwandung während eines Betriebs der Rotationskolbenmaschine ausgestaltet sind. Die Rotationskolbenmaschine weist vorzugsweise wenigstens ein Kolbengehäuse auf. Die Rotationskolbenmaschine kann aber auch zwei oder mehr Kolbengehäuse aufweisen, die gleich oder im Wesentlichen gleich zueinander ausgestaltet sein können. Die Drehachse der Exzenterwelle liegt vorzugsweise im Hauptzentrum. Das heißt, die Exzenterwelle ist vorzugsweise konzentrisch zum Gehäusevolumen angeordnet.

Bei einer weiteren Ausführungsform der vorliegenden Erfindung ist es möglich, dass der Rotationskolben drei Kolbenecken und zwischen zwei Kolbenecken eine Kolbenbreite aufweist, wobei eine Exzentrizität des Exzenters zur Exzenterwelle ein Maß in einem Bereich zwischen 5 % und 15 % der Kolbenbreite und/oder in einem Bereich zwischen 20 mm und 30 mm, insbesondere in einem Bereich zwischen 23 mm und 25 mm, aufweist. Die Kolbenbreite kann in einem Bereich zwischen 150 mm und 250 mm, insbesondere in einem Bereich zwischen 210 mm und 190 mm, liegen. Die Dicke bzw. Höhe des Rotationskolbens kann in einem Bereich zwischen 50 mm und 100 mm, insbesondere in einem Bereich zwischen 70 mm und 75 mm, liegen. Mit einer derart dimensionierten Rotationskolbenmaschine kann ein besonders effizienter Betrieb mit einem entsprechend hohen Wirkungsgrad erzielt werden.

Darüber hinaus umfasst eine Rotationskolbenmaschine gemäß der vorliegenden Erfindung vorzugsweise eine Gasströmungseinstelleinheit zum Freigeben der Hochdrucköffnungen und der Niederdrucköffnungen zum gegenläufigen, insbesondere abwechselnd gegenläufigen Einlassen von Hochdruckgas aus einer Hochdruckleitung in das Gehäusevolumen durch die erste Hochdrucköffnung und durch die zweite Hochdrucköffnung, zum gegenläufigen, insbesondere gleichzeitig gegenläufigen Auslassen von Niederdruckgas in Form von expandiertem Hochdruckgas aus der ersten Niederdrucköffnung und aus der zweiten Niederdrucköffnung in eine Niederdruckleitung während des Expansionsbetriebs, zum gegenläufigen, insbesondere gleichzeitig gegenläufigen Einlassen von Niederdruckgas aus einer Niederdruckleitung in das Gehäusevolumen durch die erste Niederdrucköffnung und die zweite Niederdrucköffnung, und/oder zum gegenläufigen, insbesondere abwechselnd gegenläufigen Auslassen von Hochdruckgas in Form von komprimiertem Niederdruckgas aus der ersten Hochdrucköffnung und aus der zweiten Hochdrucköffnung in eine Hochdruckleitung während des Kompressionsbetriebs. Hierfür kann die Gasströmungseinstelleinheit eine Ventilanordnung mit beispielsweise vier Ventilen bzw. jeweils einem Ventil zum Öffnen und Schließen einer der Niederdrucköffnungen und Hochdrucköffnungen sowie eine Kontrolleinheit zum Ansteuern der Ventile zum gewünschten Öffnen oder Schließen der Niederdrucköffnungen und der Hochdrucköffnungen aufweisen. Das heißt, an der ersten Hochdrucköffnung und/oder in einer ersten Hochdruckleitung zur ersten Hochdrucköffnung kann ein erstes Ventil zum Sperren und Freigeben der ersten Hochdrucköffnung ausgestaltet sein. An der zweiten Hochdrucköffnung und/oder in einer zweiten Hochdruckleitung zur zweiten Hochdrucköffnung kann ein zweites Ventil zum Sperren und Freigeben der zweiten Hochdrucköffnung ausgestaltet sein. An der ersten Niederdrucköffnung und/oder in einer ersten Niederdruckleitung zur ersten Niederdrucköffnung kann ein drittes Ventil zum Sperren und Freigeben der ersten Niederdrucköffnung ausgestaltet sein. An der zweiten Niederdrucköffnung und/oder in einer zweiten Niederdruckleitung zur zweiten Niederdrucköffnung kann ein viertes Ventil zum Sperren und Freigeben der zweiten Niederdrucköffnung ausgestaltet sein.

Eine weitere Ausgestaltungsvariante der vorliegenden Erfindung betrifft eine Rotationskolbenmaschine mit einer ersten Bauteilanordnung, die den dreieckigen Rotationskolben, den Exzenter und das Kolbengehäuse aufweist, wobei der Rotationskolben rotierbar im Gehäusevolumen auf dem Exzenter positioniert ist, und eine zweite Bauteilanordnung, die einen zweiten dreieckigen Rotationskolben, einen zweiten Exzenter der Exzenterwelle und ein zweites, dem ersten Kolbengehäuse entsprechendes Kolbengehäuse aufweist, wobei der zweite Rotationskolben rotierbar in einem zweiten Gehäusevolumen des zweiten Kolbengehäuses auf dem zweiten Exzenter positioniert ist, und wobei die erste Bauteilanordnung in einer Rotationsrichtung der Exzenterwelle um 180° gedreht zur zweiten Bauteilanordnung angeordnet ist. Die zweite Bauteilanordnung kann sich demnach dahingehend von der ersten Bauteilanordnung unterscheiden, dass der Rotationskolben in der zweiten Bauteilanordnung um 180° phasenverdreht zum ersten Rotationskolben angeordnet ist. Damit können Massenkräfte und Drehmomente in und/oder an der Rotationkolbenmaschine kompensiert und ein entsprechend ruhiger Betrieb der Rotationkolbenmaschine erreicht werden. Darunter, dass das zweite Kolbengehäuse dem ersten Kolbengehäuse entspricht kann verstanden werden, dass das erste Kolbengehäuse gleich oder im Wesentlichen gleich dem zweiten Kolbengehäuse ausgestaltet ist. So weist auch das zweite Kolbengehäuse ein erstes Gehäuseteil und ein zweites Gehäuseteil auf, wobei am ersten Gehäuseteil eine erste Hochdrucköffnung zum Einlassen von Hochdruckgas in das Gehäusevolumen sowie zum Auslassen von Hochdruckgas aus dem Gehäusevolumen und eine erste Niederdrucköffnung zum Einlassen von Niederdruckgas in das Gehäusevolumen sowie zum Auslassen von Niederdruckgas aus dem Gehäusevolumen ausgestaltet sind. Am zweiten Gehäuseteil des zweiten Kolbengehäuses können eine zweite Hochdrucköffnung zum Einlassen von Hochdruckgas in das Gehäusevolumen sowie zum Auslassen von Hochdruckgas aus dem Gehäusevolumen und eine zweite Niederdrucköffnung zum Einlassen von Niederdruckgas in das Gehäusevolumen sowie zum Auslassen von Niederdruckgas aus dem Gehäusevolumen ausgestaltet sein, wobei die erste Hochdrucköffnung und die zweite Hochdrucköffnung zum gegenläufigen Einlassen des Hochdruckgases in das Gehäusevolumen ausgestaltet sind und die erste Niederdruck-Gasöffnung und die zweite Niederdrucköffnung zum gegenläufigen Einlassen des Niederdruckgases in das Gehäusevolumen ausgestaltet sind. Das erste Kolbengehäuse und das zweite Kolbengehäuse können bei einer erfindungsgemäßen Rotationskolbenmaschine schichtartig, optional nur durch eine Deckplatte zum Bedecken von wenigstens einem Teil des jeweiligen Gehäusevolumens getrennt, übereinander angeordnet sein. Das heißt, eine Rotationskolbenmaschine gemäß der vorliegenden Erfindung kann eine Deckplatte zum Verschließen von wenigstens einer seitlichen Öffnung des ersten Kolbengehäuses und/oder einer seitlichen Öffnung des zweiten Kolbengehäuses sowie zum Beabstanden des ersten Kolbengehäuses und des zweiten Kolbengehäuses voneinander aufweisen. Mittels der Deckplatten kann eine kompakte Rotationskolbenmaschine im Baukastensystem bereitgestellt werden. Die jeweiligen Komponenten sind relativ einfach zu fertigen und zusammenzubauen. Die Verwendung einer Deckplatte oder mehrerer Deckplatten hängt davon ab, ob das erste Kolbengehäuse und das zweite Kolbengehäuse ein an seinen Seiten jeweils offenes oder im Wesentlichen geschlossenes Kolbengehäuse sind. Unter einem im Wesentlichen geschlossenen Kolbengehäuse kann ein Kolbengehäuse verstanden werden, bei welchen abgesehen von den Hochdrucköffnungen und den Niederdrucköffnungen beispielsweise nur eine Durchgangsöffnung zum Positionieren eines Teils der Exzenterwelle im Kolbengehäuse ausgestaltet ist. Eine Rotationskolbenmaschine mit einem ersten Kolbengehäuse und einem zweiten Kolbengehäuse kann auch vier weitere, wie vorstehend bereits beschriebene Ventile aufweisen, die an jeweils einer Hochdrucköffnung bzw. in einer dort ausgestalteten Hochdruckleitung und einer Niederdrucköffnung bzw. in einer dort ausgestalteten Niederdruckleitung zum Öffnen bzw. Freigeben und Schließen bzw. Sperren der jeweiligen Öffnung positioniert sind.

Eine erfindungsgemäße Rotationskolbenmaschine kann zudem einen Motor/Generator zum Drehen der Exzenterwelle im Kompressionsbetrieb als Motor in eine erste Richtung und zum Drehenlassen der Exzenterwelle im Expansionsbetrieb als Generator in eine der ersten Richtung entgegengesetzte zweite Richtung aufweisen. Das heißt, im Kompressionsbetrieb wird die Rotationskolbenmaschine in die erste Richtung betrieben und im Expansionsbetrieb wird die Rotationskolbenmaschine in die zweite Richtung betrieben. Im eingangs beschriebenen Stand der Technik kann die Rotationskolbenmaschine hingegen nur in eine Richtung betrieben werden. Der dort beschriebene Motor/Generator ist entsprechend nur für eine Betriebsrichtung konfiguriert. Mit dem erfindungsgemäß konfigurierten Motor/Generator können der Kompressionsbetrieb und der Expansionsbetrieb problemlos mit der vorstehend beschriebenen hohen Effizienz bzw. dem entsprechend hohen Wirkungsgrad durchgeführt werden.

Gemäß einem weiteren Aspekt der vorliegenden Erfindung wird ein Gasdruck-Regelsystem zur Verwendung in einem Gasleitungsnetz zum Regeln von unterschiedlichen Gasdrücken im Gasleitungsnetz zur Verfügung gestellt. Das Gasdruck-Regelsystem weist eine Hochdruckleitung zum Leiten von Hochdruckgas, eine Niederdruckleitung zum Leiten von Niederdruckgas, und eine wie vorstehend im Detail beschriebene Rotationskolbenmaschine zum Komprimieren von Niederdruckgas aus der Niederdruckleitung in Hochdruckgas für die Hochdruckleitung im Kompressionsbetrieb und zum Expandieren von Hochdruckgas aus der Hochdruckleitung in Niederdruckgas für die Niederdruckleitung im Expansionsbetrieb auf.

Ergänzend wird im Rahmend der vorliegenden Erfindung ein Verfahren zum Betreiben eines wie vorstehend beschriebenen Gasdruck-Regelsystems bereitgestellt. Das Verfahren weist die folgenden Schritte auf:
- Freigeben der Hochdrucköffnungen und der Niederdrucköffnungen zum gegenläufigen Einlassen von Hochdruckgas aus einer Hochdruckleitung in das Gehäusevolumen durch die erste Hochdrucköffnung und durch die zweite Hochdrucköffnung sowie zum gegenläufigen Auslassen von Niederdruckgas in Form von expandiertem Hochdruckgas aus der ersten Niederdrucköffnung und aus der zweiten Niederdrucköffnung in eine Niederdruckleitung während des Expansionsbetriebs mittels der Gasströmungseinstelleinheit oder
- Freigeben der Hochdrucköffnungen und der Niederdrucköffnungen zum gegenläufigen Einlassen von Niederdruckgas aus einer Niederdruckleitung in das Gehäusevolumen durch die erste Niederdrucköffnung und die zweite Niederdrucköffnung sowie zum gegenläufigen Auslassen von Hochdruckgas in Form von komprimiertem Niederdruckgas aus der ersten Hochdrucköffnung und aus der zweiten Hochdrucköffnung in eine Hochdruckleitung während des Kompressionsbetriebs mittels der Gasströmungseinstelleinheit.

Damit bringt auch das erfindungsgemäße Verfahren die vorstehend beschriebenen Vorteile mit sich. Während des Kompressionsbetriebs wird die Exzenterwelle in eine erste Richtung gedreht und im Expansionsbetrieb wird die Exzenterwelle in eine der ersten Richtung entgegengesetzte zweite Richtung gedreht. Im Rahmen des Verfahrens wird das Gasdruck-Regelsystem insbesondere in einem Gasleitungsnetz für einen Druckausgleich und/oder einer Druckverschiebung zwischen dem Hochdruckgas und dem Niederdruckgas durchgeführt. Unter dem Gasleitungsnetz kann insbesondere ein Gasleitungsnetz zum Versorgen von Haushalten mit Erdgas verstanden werden.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: eine Rotationskolbenmaschine mit einem Kolbengehäuse gemäß einer ersten Ausführungsform der vorliegenden Erfindung,
- Figur 2: eine Rotationskolbenmaschine mit zwei Kolbengehäusen gemäß einer zweiten Ausführungsform der vorliegenden Erfindung,
- Figur 3: die in Figur 2 dargestellte Rotationskolbenmaschine in einem erfindungsgemäßen Gasdruck-Regelsystem in einem Expansionsbetrieb,
- Figur 4: die in Figur 2 dargestellte Rotationskolbenmaschine in einem erfindungsgemäßen Gasdruck-Regelsystem in einem Kompressionsbetrieb,
- Figur 5: ein Kennliniendiagramm zum Erläutern eines Expansionsbetriebs,
- Figur 6: ein Kennliniendiagramm zum Erläutern eines Kompressionsbetriebs, und
- Figuren 7 - 9: die in Fig. 1 gezeigte Rotationskolbenmaschine in unterschiedlichen Betriebszuständen zum Erläutern eines Expansionsbetriebs.

Elemente mit gleicher Funktion und Wirkungsweise sind in den Figuren jeweils mit den gleichen Bezugszeichen versehen.

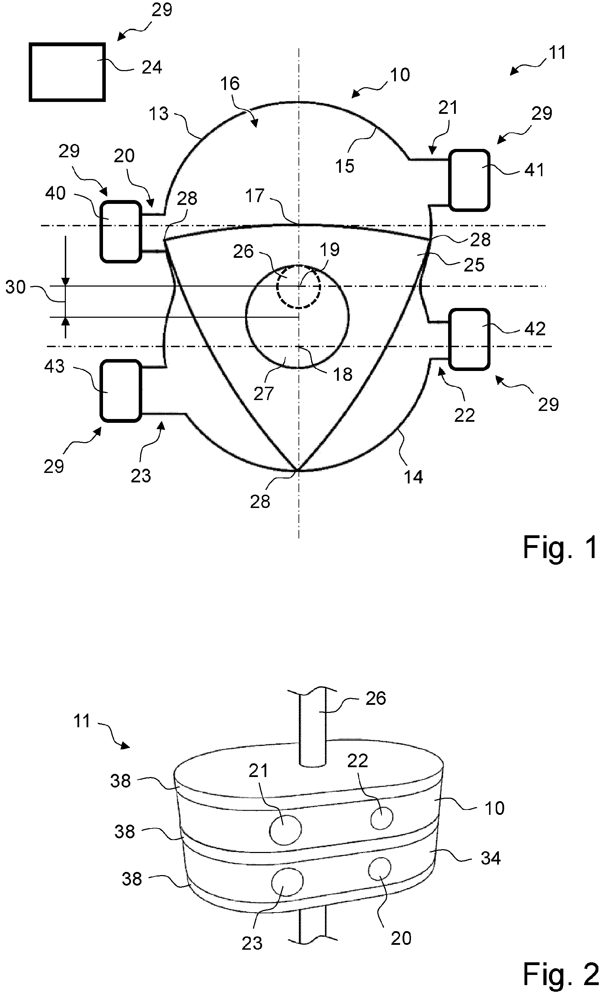

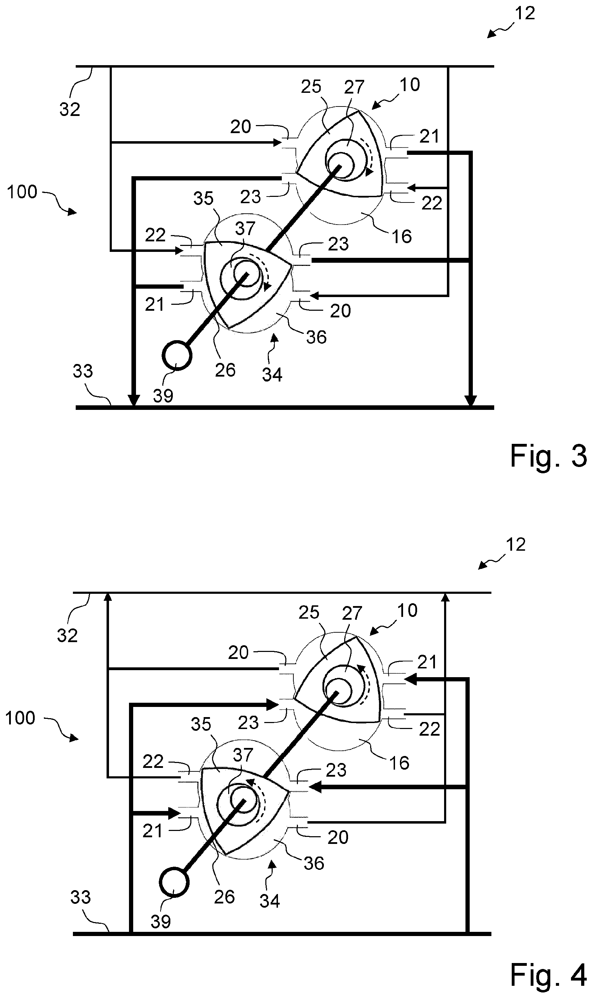

Fig. 1 zeigt eine Rotationskolbenmaschine 11 zum Regeln von unterschiedlichen Gasdrücken in einem in Fig. 3 und Fig. 4 gezeigten Gasleitungsnetz 12 durch einen Kompressionsbetrieb zum Komprimieren von Niederdruckgas in Hochdruckgas und durch einen Expansionsbetrieb zum Expandieren von Hochdruckgas in Niederdruckgas. Die gezeigte Rotationskolbenmaschine 11 weist einen dreieckigen Rotationskolben 25, eine Exzenterwelle 26 mit einem Exzenter 27 und ein Kolbengehäuse 10 auf. Der Rotationskolben 25 ist rotierbar im Gehäusevolumen 16 auf dem Exzenter 27 positioniert. Das Kolbengehäuse 10 weist einen ersten Gehäuseteil 13 mit einer kreissegmentförmigen Innenkontur und einen zweiten Gehäuseteil 14 mit einer kreissegmentförmigen Innenkontur auf, wobei der erste Gehäuseteil 13 und der zweite Gehäuseteil 14 zusammen eine Gehäuseinnenwandung 15 mit einer trochoidenförmigen Gehäuseinnenkontur zum Definieren eines Gehäusevolumens 16 für den darin rotier- bzw. drehbaren Rotationskolben 25 der Rotationskolbenmaschine 11 bilden.

Am ersten Gehäuseteil 13 ist eine erste Hochdrucköffnung 20 zum Einlassen von Hochdruckgas in das Gehäusevolumen 16 sowie zum Auslassen von Hochdruckgas aus dem Gehäusevolumen 16 und eine erste Niederdrucköffnung 21 zum Einlassen von Niederdruckgas in das Gehäusevolumen 16 sowie zum Auslassen von Niederdruckgas aus dem Gehäusevolumen 16 ausgestaltet. Am zweiten Gehäuseteil 14 sind eine zweite Hochdrucköffnung 22 zum Einlassen von Hochdruckgas in das Gehäusevolumen 16 sowie zum Auslassen von Hochdruckgas aus dem Gehäusevolumen 16 und eine zweite Niederdrucköffnung 23 zum Einlassen von Niederdruckgas in das Gehäusevolumen 16 sowie zum Auslassen von Niederdruckgas aus dem Gehäusevolumen 16 ausgestaltet. Die erste Hochdrucköffnung 20 und die zweite Hochdrucköffnung 22 sind zum gegenläufigen Einlassen des Hochdruckgases in das Gehäusevolumen 16 sowie zum gegenläufigen Auslassen des Hochdruckgases aus dem Gehäusevolumen 16 ausgestaltet. Analog sind die erste Niederdruck-Gasöffnung 21 und die zweite Niederdrucköffnung 23 zum gegenläufigen Einlassen des Niederdruckgases in das Gehäusevolumen 16 sowie zum gegenläufigen bzw. bidirektionalen Auslassen des Niederdruckgases aus dem Gehäusevolumen 16 ausgestaltet. So können in einem Expansionsbetrieb der Rotationskolbenmaschine 11 Hochdruckgas abwechselnd gegenläufig durch die erste Hochdrucköffnung 20 und die zweite Hochdrucköffnung 22 in das Gehäusevolumen 16 und als expandiertes bzw. druckreduziertes Niederdruckgas gleichzeitig gegenläufig durch die erste Niederdrucköffnung 21 und die zweite Niederdrucköffnung 23 aus dem Gehäusevolumen 16 geleitet werden. In einem Kompressionsbetrieb der Rotationskolbenmaschine 11 können Niederdruckgas gleichzeitig gegenläufig durch die erste Niederdrucköffnung 21 und die zweite Niederdrucköffnung 23 in das Gehäusevolumen 16 und als komprimiertes bzw. druckbeaufschlagtes Hochdruckgas abwechselnd gegenläufig durch die erste Hochdrucköffnung 20 und die zweite Hochdrucköffnung 22 aus dem Gehäusevolumen 16 geleitet werden.

Bei dem in Fig. 1 dargestellten Kolbengehäuse 10 weisen die kreissegmentförmige Innenkontur des ersten Gehäuseteils 13 ein erstes Zentrum 17, die kreissegmentförmige Innenkontur des zweiten Gehäuseteils 14 ein zweites Zentrum 18 und die trochoidenförmige Gehäuseinnenkontur ein Hauptzentrum 19 mittig zwischen dem ersten Zentrum 17 und dem zweiten Zentrum 18 auf. Die erste Hochdrucköffnung 20 weist am Gehäusevolumen 16 eine Exzentrizität zum ersten Zentrum 17 in Richtung des Hauptzentrums 19 auf, die erste Niederdrucköffnung 21 weist am Gehäusevolumen 16 eine Exzentrizität zum ersten Zentrum 17 in einer Richtung weg vom Hauptzentrums 19 auf, die zweite Hochdrucköffnung 22 weist am Gehäusevolumen 16 eine Exzentrizität zum zweiten Zentrum 18 in Richtung des Hauptzentrums 19 auf und die zweite Niederdrucköffnung 23 weist am Gehäusevolumen 16 eine Exzentrizität zum zweiten Zentrum 18 in einer Richtung weg vom Hauptzentrums 19 auf. Dies bezieht sich jeweils auf eine Mittelachse der Hochdrucköffnungen 20, 22, der Niederdrucköffnungen 21, 23 sowie der verschiedenen Zentren 17, 18, 19.

Bei der in Fig. 1 dargestellten Rotationskolbenmaschine 11 weist der Rotationskolben 25 drei Kolbenecken 28 und zwischen zwei Kolbenecken 28 eine Kolbenbreite auf, wobei die Exzentrizität 30 des Exzenters 27 zur Exzenterwelle 26 ca. 25 mm aufweist. Wie ferner in Fig. 1 zu erkennen ist der Querschnitt bzw. die Querschnittsfläche der Hochdrucköffnungen 20, 22 am Gehäusevolumen 16 jeweils kleiner als der Querschnitt der Niederdrucköffnungen 21, 23 am Gehäusevolumen 16. Darüber hinaus umfasst die Rotationskolbenmaschine 11 eine Gasströmungseinstelleinheit 29 zum Freigeben der Hochdrucköffnungen 20, 22 und der Niederdrucköffnungen 21, 23 zum gegenläufigen Einlassen von Hochdruckgas aus der in Fig. 3 und Fig. 4 gezeigten Hochdruckleitung 32 des Gasleitungsnetztes 12 in das Gehäusevolumen 16 durch die erste Hochdrucköffnung 20 und durch die zweite Hochdrucköffnung 22, zum gegenläufigen Auslassen von Niederdruckgas in Form von expandiertem Hochdruckgas aus der ersten Niederdrucköffnung 21 und aus der zweiten Niederdrucköffnung 23 die Niederdruckleitung 33 des Gasleitungsnetztes 12 während des Expansionsbetriebs, zum gegenläufigen Einlassen von Niederdruckgas aus der Niederdruckleitung 33 des Gasleitungsnetzes 12 in das Gehäusevolumen 16 durch die erste Niederdrucköffnung 21 und die zweite Niederdrucköffnung 23 sowie zum gegenläufigen Auslassen von Hochdruckgas in Form von komprimiertem Niederdruckgas aus der ersten Hochdrucköffnung 20 und aus der zweiten Hochdrucköffnung 22 in eine Hochdruckleitung 32 des Gasleitungsnetzes 12 während des Kompressionsbetriebs. Hierzu weist die Gasströmungseinstelleinheit 29 ein erstes Ventil 40, ein zweites Ventil 41, ein drittes Ventil 42, ein viertes Ventil 43 sowie eine Kontrolleinheit 24 zum Ansteuern der Ventile 40, 41, 42, 43 auf. Das erste Ventil 40 ist an der ersten Hochdrucköffnung 20 zum Sperren und Freigeben der ersten Hochdrucköffnung 20 angeordnet. Das zweite Ventil 41 ist an der ersten Niederdrucköffnung 21 zum Sperren und Freigeben der ersten Niederdrucköffnung 21 angeordnet. Das dritte Ventil 42 ist an der zweiten Hochdrucköffnung 22 zum Sperren und Freigeben der zweiten Hochdrucköffnung 22 angeordnet. Das vierte Ventil 43 ist an der zweiten Niederdrucköffnung 23 zum Sperren und Freigeben der zweiten Niederdrucköffnung 23 angeordnet. Die Ventile 40, 41, 42, 43 können, wie in Fig. 1 dargestellt, an den Hochdrucköffnungen 20, 22 und an den Niederdrucköffnungen 21, 23 sowie wenigstens teilweise im Kolbengehäuse 10 angeordnet sein. Gleichwohl können die Ventile auch außerhalb des Kolbengehäuses 10, in unterschiedlichen Formen, aktiv anzusteuernd oder passiv funktionierend, ausgestaltet sein.

In Fig. 2 ist eine Rotationskolbenmaschine 11 gemäß einer zweiten Ausführungsform der vorliegenden Erfindung gezeigt. Die Rotationskolbenmaschine 11 gemäß dieser Ausführungsform weist eine erste Bauteilanordnung auf, die den dreieckigen Rotationskolben 25, den Exzenter 27 und das Kolbengehäuse 10 gemäß der in Fig. 1 gezeigten Ausführungsform umfasst. Die gezeigte Rotationskolbenmaschine 11 weist ferner eine zweite Bauteilanordnung mit einem zweiten Kolbengehäuse 34 auf. Außerdem weist die Rotationsmaschine 11 drei Deckplatten 38 zum Abdecken der Seitenflächen der Kolbengehäuse 10, 34 auf. Wie in Fig. 2 dargestellt, sind die Deckplatten 38 und die Kolbengehäuse 10, 34 schichtartig übereinander bzw. aneinander angeordnet. Genauer gesagt befindet sich eine Deckplatte 38 sandwichartig zwischen dem ersten Kolbengehäuse 10 und dem zweiten Kolbengehäuse 34. Das erste Kolbengehäuse 10 und das zweite Kolbengehäuse 34 befinden sich wiederum sandwichartig zwischen einer oberen Deckplatte 38 und einer unteren Deckplatte 38. Die Deckplatten 38 weisen jeweils lediglich eine Durchgangsöffnung zum Positionieren der Exzenterwelle 26 darin bzw. in der Rotationskolbenmaschine 11 auf.

In den Figuren 3 und 4 ist ein Gasdruck-Regelsystem 100 zur Verwendung in einem Gasleitungsnetz 12 zum Regeln von unterschiedlichen Gasdrücken im Gasleitungsnetz 12 dargestellt. Das Gasdruck-Regelsystem 100 weist eine Rotationskolbenmaschine 11 gemäß der zweiten Ausführungsform auf, die in einer Art Explosionsdarstellung bzw. für ein besseres Verständnis der Funktionsweise in einer aufgeteilten Ansicht gezeigt ist. In Fig. 3 ist außerdem die zweite Bauteilanordnung im weiteren Detail dargestellt. Die zweite Bauteilanordnung weist neben dem zweiten Kolbengehäuse 34 noch einen zweiten dreieckigen Rotationskolben 35 und einen zweiten Exzenter 37 der Exzenterwelle 26 auf. Der zweite Rotationskolben 35 ist rotierbar in einem zweiten Gehäusevolumen 36 des zweiten Kolbengehäuses 34 auf bzw. an dem zweiten Exzenter 37 positioniert. Wie in Fig. 3 dargestellt, ist die erste Bauteilanordnung in einer Rotationsrichtung der Exzenterwelle 26 um 180° gedreht zur zweiten Bauteilanordnung angeordnet. Mit anderen Worten, der zweite Rotationskolben 35 ist in Phasenrichtung um 180° gedreht zum ersten Rotationskolben 25 positioniert. Weiterhin weist die Rotationskolbenmaschine 11 einen Motor/Generator 39 auf, der mechanisch mit der Exzenterwelle 26 verbunden bzw. verbindbar ist. Der Motor/Generator 39 funktioniert zum Drehen der Exzenterwelle 26 im Kompressionsbetrieb in eine erste Richtung als Motor und zum Drehenlassen der Exzenterwelle 26 im Expansionsbetrieb durch das Hochdruckgas in eine der ersten Richtung entgegengesetzte zweite Richtung als Generator. Die Hochdruckleitungen 32 bzw. die entsprechende Hochdruckseite ist symbolisch mit einer dünneren Linie als die Niederdruckleitungen 33 bzw. die entsprechende Niederdruckseite dargestellt. Im und/oder am jeweiligen Kolbengehäuse 10, 34 weisen die Niederdruckleitungen zwar auch eine kleinere Querschnittsfläche als die Hochdruckleitungen im und/oder am jeweiligen Kolbengehäuse auf, entfernt vom jeweiligen Kolbengehäuse können die Leitungsquerschnitte allerdings auch gleich groß bzw. mit gleicher Querschnittsfläche ausgestaltet sein.

In Fig. 3 ist ein Expansionsbetrieb dargestellt, bei welchem der Motor/Generator 39 als Motor betrieben die Exzenterwelle 26 antreibt und über ein Drehen der Rotationskolben 25, 35 damit Niederdruckgas aus der Niederdruckleitung 32 in das erste Gehäusevolumen 16 und in das zweite Gehäusevolumen 36 leitet. Durch die Bewegung der Rotationskolben 25, 35 in den Gehäusevolumen 16, 36 wird das dort befindliche Niederdruckgas verdichtet und als Hochdruckgas in die Hochdruckleitung 32 ausgelassen bzw. gedrückt. In Fig. 4 ist ein Kompressionsbetrieb dargestellt, bei welchem der Motor/Generator 39 als Generator betrieben wird, indem die Exzenterwelle 26 durch Hochdruckgas, das in die Gehäusevolumen 16, 36 strömt bzw. geleitet wird und dort die Rotationskolben 25, 35 antreibt, gedreht wird. Durch die Bewegung der Rotationskolben 25, 35 in den Gehäusevolumen 16, 36 wird das dort befindliche Hochdruckgas bei geöffneten Niederdrucköffnungen expandiert und als Niederdruckgas in die Niederdruckleitung 33 ausgelassen.

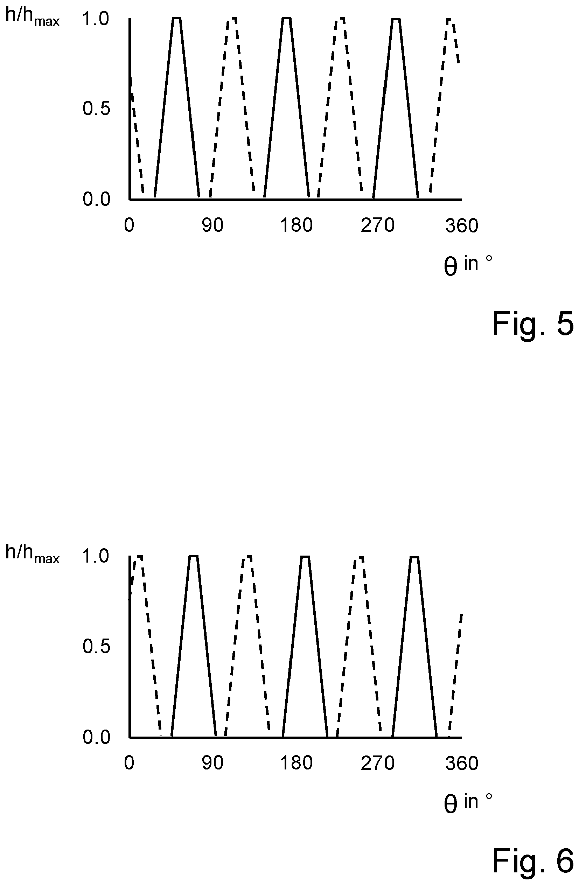

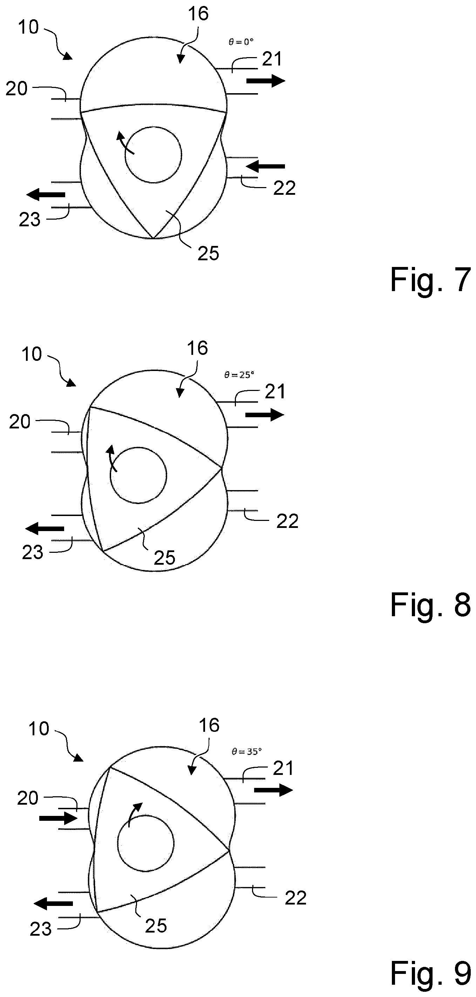

Mit Bezug auf die zusammengehörenden Figuren 5 und 7 bis 9 wird anschließend ein Verfahren zum Betreiben eines wie vorstehend beschriebenen Gasdruck-Regelsystems 100 mit einer Rotationskolbenmaschine 11 gemäß Fig. 1 in einem Expansionsbetrieb beschrieben. Im Rahmen des Verfahrens werden hierfür die Hochdrucköffnungen 20, 22 und die Niederdrucköffnungen 21, 23 zum gegenläufigen Einlassen von Hochdruckgas aus der Hochdruckleitung 32 in das Gehäusevolumen 16 durch die erste Hochdrucköffnung 20 und durch die zweite Hochdrucköffnung 22 sowie zum gegenläufigen Auslassen von Niederdruckgas in Form von expandiertem Hochdruckgas aus der ersten Niederdrucköffnung 21 und aus der zweiten Niederdrucköffnung 23 in die Niederdruckleitung 33 während des Expansionsbetriebs mittels der Gasströmungseinstelleinheit 29 teilweise gleichzeitig und teilweise zu unterschiedlichen Zeitpunkten freigegeben. Dies soll mit Bezug auf die Figuren 5 und 7 bis 9 verdeutlicht werden. Mit Blick auf Fig. 5 und Fig. 7 befindet sich der Rotationskolben 25 in einer 0° Stellung. In dieser sind die erste Niederdrucköffnung 21 und die zweite Niederdrucköffnung 23 geöffnet. Auch die zweite Hochdrucköffnung 22 ist noch geöffnet. Die erste Hochdrucköffnung 20 ist geschlossen. So wird Niederdruckgas aus den beiden Niederdrucköffnungen 21, 23 aus dem Gehäusevolumen 16 geleitet und Hochdruckgas durch die zweite Hochdrucköffnung 22 in das Gehäusevolumen 16 geleitet. Während sich der Rotationskolben nun weiter in die in Fig. 8 gezeigte Position dreht, wird die zweite Hochdrucköffnung 22 geschlossen bzw. gesperrt, um ein weiteres Einströmen von Hochdruckgas durch die zweite Hochdrucköffnung 22 in das Gehäusevolumen 16 zu verhindern. Gleichzeitig kann das durch die zweite Hochdrucköffnung 22 in das Gehäusevolumen 16 geleitete Hochdruckgas im Gehäusevolumen 16, genauer gesagt im Gehäusevolumen 16 des unteren bzw. zweiten Gehäuseteils 14 expandieren. Dieser Prozess findet, wenn auch bereits fortgeschritten, gleichzeitig im oberen bzw. ersten Gehäuseteil 13 statt. Dies spiegelt sich entsprechend im Kennliniendiagramm gemäß Fig. 5 wider, bei welchem die gestrichelte Linie dem Gasmassenstrom des Hochdruckgases durch die zweite Hochdrucköffnung 22 entspricht und die durchgehende Linie dem Gasmassenstrom des Hochdruckgases durch die erste Hochdrucköffnung 20 entspricht. Dreht sich der Rotationskolben nun von der in Fig. 8 gezeigten Stellung in die Stellung gemäß Fig. 9 weiter, wird die erste Hochdrucköffnung 20 zum Einlassen von Hochdruckgas durch die erste Hochdrucköffnung 20 in das Gehäusevolumen 16 freigegeben bzw. geöffnet. Wie in den Figuren 7 bis 9 zu erkennen, werden das Hochdruckgas abwechselnd und das Niederdruckgas gleichzeitig gegenläufig in das Gehäusevolumen 16 geleitet. Eine volle Umdrehung des Rotationskolbens 25 während des Expansionsbetriebs kann insbesondere mit Blick auf Fig. 5 erkannt werden. In Fig. 6 ist der Druckverlauf des Hochdruckgases in einem analogen Kompressionsbetrieb der Rotationskolbenmaschine 11 dargestellt, wobei die gestrichelte Linie wieder dem Gasmassenstrom des Hochdruckgases durch die zweite Hochdrucköffnung 22 entspricht und die durchgehende Linie dem Gasmassenstrom des Hochdruckgases durch die erste Hochdrucköffnung 20 entspricht. Die Rotationskolbenmaschine 11 ist jeweils für einen Funktionsbetrieb mit mehreren 1000 U/min konfiguriert.

Die Erfindung lässt neben den dargestellten Ausführungsformen weitere Gestaltungsgrundsätze zu. Das heißt, die Erfindung soll nicht auf die mit Bezug auf die Figuren erläuterten Ausführungsbeispiele beschränkt betrachtet werden.

### Bezugszeichenliste

- 10: Kolbengehäuse
- 11: Rotationskolbenmaschine
- 12: Gasleitungsnetz
- 13: erster Gehäuseteil
- 14: zweiter Gehäuseteil
- 15: Gehäuseinnenwandung
- 16: Gehäusevolumen
- 17: erstes Zentrum
- 18: zweites Zentrum
- 19: Hauptzentrum
- 20: erste Hochdrucköffnung
- 21: erste Niederdrucköffnung
- 22: zweite Hochdrucköffnung
- 23: zweite Niederdrucköffnung
- 24: Kontrolleinheit
- 25: Rotationskolben
- 26: Exzenterwelle
- 27: Exzenter
- 28: Kolbenecke
- 29: Gasströmungseinstelleinheit
- 30: Exzentrizität
- 32: Hochdruckleitung
- 33: Niederdruckleitung
- 34: zweites Kolbengehäuse
- 35: zweiter Rotationskolben
- 36: zweites Gehäusevolumen
- 37: zweiter Exzenter
- 38: Deckplatte
- 39: Motor/Generator
- 40: Ventil
- 41: Ventil
- 42: Ventil
- 43: Ventil
- 100: Gasdruck-Regelsystem

## Patentansprüche

1. Kolbengehäuse (10) für eine Rotationskolbenmaschine (11) zum Regeln von unterschiedlichen Gasdrücken in einem Gasleitungsnetz (12), aufweisend einen ersten Gehäuseteil (13) mit einer kreissegmentförmigen Innenkontur und einen zweiten Gehäuseteil (14) mit einer kreissegmentförmigen Innenkontur, wobei der erste Gehäuseteil (13) und der zweite Gehäuseteil (14) zusammen eine Gehäuseinnenwandung (15) mit einer trochoidenförmigen Gehäuseinnenkontur zum Definieren eines Gehäusevolumens (16) für einen darin rotierbaren dreieckigen Rotationskolben (25) der Rotationskolbenmaschine (11) bilden,
**dadurch gekennzeichnet,**
**dass** am ersten Gehäuseteil (13) eine erste Hochdrucköffnung (20) zum Einlassen von Hochdruckgas in das Gehäusevolumen (16) sowie zum Auslassen von Hochdruckgas aus dem Gehäusevolumen (16) und eine erste Niederdrucköffnung (21) zum Einlassen von Niederdruckgas in das Gehäusevolumen (16) sowie zum Auslassen von Niederdruckgas aus dem Gehäusevolumen (16) konfiguriert sind, und dass am zweiten Gehäuseteil (14) eine zweite Hochdrucköffnung (22) zum Einlassen von Hochdruckgas in das Gehäusevolumen (16) sowie zum Auslassen von Hochdruckgas aus dem Gehäusevolumen (16) und eine zweite Niederdrucköffnung (23) zum Einlassen von Niederdruckgas in das Gehäusevolumen (16) sowie zum Auslassen von Niederdruckgas aus dem Gehäusevolumen (16) konfiguriert sind, wobei die erste Hochdrucköffnung (20) und die zweite Hochdrucköffnung (22) zum gegenläufigen Einlassen des Hochdruckgases in das Gehäusevolumen (16) konfiguriert sind und die erste Niederdruck-Gasöffnung (21) und die zweite Niederdrucköffnung (23) zum gegenläufigen Einlassen des Niederdruckgases in das Gehäusevolumen (16) konfiguriert sind.

2. Kolbengehäuse (10) nach Anspruch 1,
**dadurch gekennzeichnet,**
**dass** die kreissegmentförmige Innenkontur des ersten Gehäuseteils (13) ein erstes Zentrum (17) aufweist, die kreissegmentförmige Innenkontur des zweiten Gehäuseteils (14) ein zweites Zentrum (18) aufweist und die trochoidenförmige Gehäuseinnenkontur ein Hauptzentrum (19) aufweist, wobei die erste Hochdrucköffnung (20) eine Exzentrizität zum ersten Zentrum (17) in Richtung des Hauptzentrums (19) aufweist, die erste Niederdrucköffnung (21) eine Exzentrizität zum ersten Zentrum (17) in einer Richtung weg vom Hauptzentrum (19) aufweist, die zweite Hochdrucköffnung (22) eine Exzentrizität zum zweiten Zentrum (18) in Richtung des Hauptzentrums (19) aufweist, und/oder die zweite Niederdrucköffnung (23) eine Exzentrizität zum zweiten Zentrum (18) in einer Richtung weg vom Hauptzentrum (19) aufweist.

3. Kolbengehäuse (10) nach einem der voranstehenden Ansprüche,
**dadurch gekennzeichnet,**
**dass** der Querschnitt der Hochdrucköffnungen (20, 22) jeweils kleiner als der Querschnitt der Niederdrucköffnungen (21, 23) ist.

4. Rotationskolbenmaschine (11) zum Regeln von unterschiedlichen Gasdrücken in einem Gasleitungsnetz (12) durch einen Kompressionsbetrieb zum Komprimieren von Niederdruckgas in Hochdruckgas und durch einen Expansionsbetrieb zum Expandieren von Hochdruckgas in Niederdruckgas, aufweisend einen dreieckigen Rotationskolben (25), eine Exzenterwelle (26) mit einem Exzenter (27) und ein Kolbengehäuse (10) nach einem der voranstehenden Ansprüche, wobei der Rotationskolben (25) rotierbar im Gehäusevolumen (16) auf dem Exzenter (27) positioniert ist.

5. Rotationskolbenmaschine (11) nach Anspruch 4,
**dadurch gekennzeichnet,**
**dass** der Rotationskolben (25) drei Kolbenecken (28) und zwischen zwei Kolbenecken (28) eine Kolbenbreite aufweist, wobei eine Exzentrizität (30) des Exzenters (27) zur Exzenterwelle (26) ein Maß in einem Bereich zwischen 5 % und 15 % der Kolbenbreite und/oder in einem Bereich zwischen 20 mm und 30 mm aufweist.

6. Rotationskolbenmaschine (11) nach einem der Ansprüche 4 bis 5,
**gekennzeichnet durch**
eine Gasströmungseinstelleinheit (29) zum Freigeben der Hochdrucköffnungen (20, 22) und der Niederdrucköffnungen (21, 23) zum gegenläufigen Einlassen von Hochdruckgas aus einer Hochdruckleitung (32) in das Gehäusevolumen (16) durch die erste Hochdrucköffnung (20) und durch die zweite Hochdrucköffnung (22), zum gegenläufigen Auslassen von Niederdruckgas in Form von expandiertem Hochdruckgas aus der ersten Niederdrucköffnung (21) und aus der zweiten Niederdrucköffnung (23) in eine Niederdruckleitung (33) während des Expansionsbetriebs, zum gegenläufigen Einlassen von Niederdruckgas aus einer Niederdruckleitung (33) in das Gehäusevolumen (26) durch die erste Niederdrucköffnung (21) und die zweite Niederdrucköffnung (23), und/oder zum gegenläufigen Auslassen von Hochdruckgas in Form von komprimiertem Niederdruckgas aus der ersten Hochdrucköffnung (20) und aus der zweiten Hochdrucköffnung (22) in eine Hochdruckleitung (32) während des Kompressionsbetriebs.

7. Rotationskolbenmaschine (11) nach einem der Ansprüche 4 bis 6,
**gekennzeichnet durch**
eine erste Bauteilanordnung, die den dreieckigen Rotationskolben (25), den Exzenter (27) und das Kolbengehäuse (10) aufweist, wobei der Rotationskolben (25) rotierbar im Gehäusevolumen (16) auf dem Exzenter (27) positioniert ist, und eine zweite Bauteilanordnung, die einen zweiten dreieckigen Rotationskolben (35), einen zweiten Exzenter (37) der Exzenterwelle (26) und ein zweites, dem ersten Kolbengehäuse (10) entsprechendes Kolbengehäuse (34) aufweist, wobei der zweite Rotationskolben (35) rotierbar in einem zweiten Gehäusevolumen (36) des zweiten Kolbengehäuses (34) auf dem zweiten Exzenter (37) positioniert ist, und wobei die erste Bauteilanordnung in einer Rotationsrichtung der Exzenterwelle (26) um 180° gedreht zur zweiten Bauteilanordnung angeordnet ist.

8. Rotationskolbenmaschine (11) nach Anspruch 7,
**gekennzeichnet durch,**
eine Deckplatte (38) zum Verschließen von wenigstens einer seitlichen Öffnung des ersten Kolbengehäuses (10) und/oder einer seitlichen Öffnung des zweiten Kolbengehäuses (34) sowie zum Beabstanden des ersten Kolbengehäuses (10) und des zweiten Kolbengehäuses (34) voneinander.

9. Rotationskolbenmaschine (11) nach einem der Ansprüche 4 bis 8,
**gekennzeichnet durch,**
einen Motor/Generator (39) zum Drehen der Exzenterwelle (26) im Kompressionsbetrieb als Motor in eine erste Richtung und zum Drehenlassen der Exzenterwelle (26) im Expansionsbetrieb als Generator in eine der ersten Richtung entgegengesetzte zweite Richtung.

10. Gasdruck-Regelsystem (100) zur Verwendung in einem Gasleitungsnetz (12) zum Regeln von unterschiedlichen Gasdrücken im Gasleitungsnetz (12), aufweisend eine Hochdruckleitung (32) zum Leiten von Hochdruckgas, eine Niederdruckleitung (33) zum Leiten von Niederdruckgas, und eine Rotationskolbenmaschine (11) nach einem der Ansprüche 4 bis 9 zum Komprimieren von Niederdruckgas aus der Niederdruckleitung (33) in Hochdruckgas für die Hochdruckleitung (32) im Kompressionsbetrieb und zum Expandieren von Hochdruckgas aus der Hochdruckleitung (32) in Niederdruckgas für die Niederdruckleitung (33) im Expansionsbetrieb.

11. Verfahren zum Betreiben eines Gasdruck-Regelsystems (100) nach Anspruch 10, aufweisend die Schritte:
- Freigeben der Hochdrucköffnungen (20, 22) und der Niederdrucköffnungen (21, 23) zum gegenläufigen Einlassen von Hochdruckgas aus einer Hochdruckleitung (32) in das Gehäusevolumen (16) durch die erste Hochdrucköffnung (20) und durch die zweite Hochdrucköffnung (22) sowie zum gegenläufigen Auslassen von Niederdruckgas in Form von expandiertem Hochdruckgas aus der ersten Niederdrucköffnung (21) und aus der zweiten Niederdrucköffnung (23) in eine Niederdruckleitung (33) während des Expansionsbetriebs mittels der Gasströmungseinstelleinheit (29) oder
- Freigeben der Hochdrucköffnungen (20, 22) und der Niederdrucköffnungen (21, 23) zum gegenläufigen Einlassen von Niederdruckgas aus einer Niederdruckleitung (33) in das Gehäusevolumen (16) durch die erste Niederdrucköffnung (21) und die zweite Niederdrucköffnung (23) sowie zum gegenläufigen Auslassen von Hochdruckgas in Form von komprimiertem Niederdruckgas aus der ersten Hochdrucköffnung (20) und aus der zweiten Hochdrucköffnung (22) in eine Hochdruckleitung (32) während des Kompressionsbetriebs mittels der Gasströmungseinstelleinheit (29).

## Claims

1. Piston housing (10) for a rotary piston machine (11) for regulating different gas pressures in a gas pipeline network (12), having a first housing part (13) with a circular segment-shaped inner contour and a second housing part (14) with a circular segment-shaped inner contour, the first housing part (13) and the second housing part (14) together forming a housing inner wall (15) with a trochoidal housing inner contour for defining a housing volume (16) for a triangular rotary piston (25) of the rotary piston machine (11) which can be rotated therein,
**characterized in that**
a first high-pressure opening (20) for admitting high-pressure gas into the housing volume (16) and for discharging high-pressure gas from the housing volume (16) and a first low-pressure opening (21) for admitting low-pressure gas into the housing volume (16) and for discharging low-pressure gas from the housing volume (16) are configured on the first housing part (13), and **in that** a second high-pressure opening (22) for admitting high-pressure gas into the housing volume (16) and for discharging high-pressure gas from the housing volume (16) and a second low-pressure opening (23) for admitting low-pressure gas into the housing volume (16) and for discharging low-pressure gas from the housing volume (16) are configured on the second housing part (14), wherein the first high-pressure opening (20) and the second high-pressure opening (22) are configured for admitting the high-pressure gas into the housing volume (16) in opposite directions and the first low-pressure gas opening (21) and the second low-pressure opening (23) are configured for admitting the low-pressure gas into the housing volume (16) in opposite directions.

2. Piston housing (10) according to claim 1,
**characterized in that**
the circular segment-shaped inner contour of the first housing part (13) has a first center (17), the circular segment-shaped inner contour of the second housing part (14) has a second center (18) and the trochoidal inner contour of the housing has a main center (19), the first high-pressure opening (20) having an eccentricity to the first center (17) in the direction of the main center (19), the first low-pressure opening (21) has an eccentricity to the first center (17) in a direction away from the main center (19), the second high-pressure opening (22) has an eccentricity to the second center (18) in the direction of the main center (19), and/or the second low-pressure opening (23) has an eccentricity to the second center (18) in a direction away from the main center (19).

3. Piston housing (10) according to one of the preceding claims,
**characterized in that**
the cross-section of the high-pressure openings (20, 22) is in each case smaller than the cross-section of the low-pressure openings (21, 23).

4. A rotary piston machine (11) for regulating different gas pressures in a gas pipeline network (12) by a compression mode for compressing low-pressure gas into high-pressure gas and by an expansion mode for expanding high-pressure gas into low-pressure gas, comprising a triangular rotary piston (25), an eccentric shaft (26) with an eccentric (27) and a piston housing (10) according to one of the preceding claims, wherein the rotary piston (25) is rotatably positioned in the housing volume (16) on the eccentric (27).

5. Rotary piston machine (11) according to claim 4,
**characterized in that**
the rotary piston (25) has three piston corners (28) and a piston width between two piston corners (28), an eccentricity (30) of the eccentric (27) relative to the eccentric shaft (26) having a dimension in a range between 5 % and 15 % of the piston width and/or in a range between 20 mm and 30 mm.

6. Rotary piston machine (11) according to any one of claims 4 to 5,
**characterized by**
a gas flow adjustment unit (29) for releasing the high pressure openings (20, 22) and the low pressure openings (21, 23) for admitting high pressure gas from a high pressure line (32) into the housing volume (16) in opposite directions through the first high pressure opening (20) and through the second high pressure opening (22), for the counter-rotating discharge of low-pressure gas in the form of expanded high-pressure gas from the first low-pressure opening (21) and from the second low-pressure opening (23) into a low-pressure line (33) during expansion operation, for admitting low-pressure gas in opposite directions from a low-pressure line (33) into the housing volume (26) through the first low-pressure opening (21) and the second low-pressure opening (23), and/or for discharging high-pressure gas in the form of compressed low-pressure gas in opposite directions from the first high-pressure opening (20) and from the second high-pressure opening (22) into a high-pressure line (32) during compression operation.

7. Rotary piston machine (11) according to any one of claims 4 to 6,
**characterized by**
a first component arrangement, which has the triangular rotary piston (25), the eccentric (27) and the piston housing (10), the rotary piston (25) being rotatably positioned in the housing volume (16) on the eccentric (27), and a second component arrangement, which has a second triangular rotary piston (35), a second eccentric (37) of the eccentric shaft (26) and a second piston housing (34) corresponding to the first piston housing (10), the second rotary piston (35) being rotatably positioned in a second housing volume (36) of the second piston housing (34) on the second eccentric (27), and wherein the first component arrangement is arranged rotated by 180° relative to the second component arrangement in a direction of rotation of the eccentric shaft (26).

8. Rotary piston machine (11) according to claim 7,
**characterized by**
a cover plate (38) for closing at least one lateral opening of the first piston housing (10) and/or one lateral opening of the second piston housing (34) and for spacing the first piston housing (10) and the second piston housing (34) from one another.

9. Rotary piston machine (11) according to any one of claims 4 to 8,
**characterized by**
a motor/generator (39) for rotating the eccentric shaft (26) in compression mode as a motor in a first direction and for rotating the eccentric shaft (26) in expansion mode as a generator in a second direction opposite to the first direction.

10. A gas pressure control system (100) for use in a gas pipeline network (12) for regulating different gas pressures in the gas pipeline network (12), comprising a high pressure line (32) for conducting high pressure gas, a low pressure line (33) for conducting low pressure gas, and a rotary piston machine (11) according to one of claims 4 to 9 for compressing low-pressure gas from the low-pressure line (33) into high-pressure gas for the high-pressure line (32) in compression mode and for expanding high-pressure gas from the high-pressure line (32) into low-pressure gas for the low-pressure line (33) in expansion mode.

11. A method of operating a gas pressure control system (100) according to claim 10, comprising the steps of:
- Release of the high-pressure openings (20, 22) and the low-pressure openings (21, 23) for admitting high pressure gas from a high pressure line (32) into the housing volume (16) in opposite directions through the first high pressure opening (20) and through the second high pressure opening (22) and for discharging low pressure gas in the form of expanded high pressure gas from the first low pressure opening (21) and from the second low pressure opening (23) into a low pressure line (33) in opposite directions during expansion operation by means of the gas flow adjustment unit (29), or
- Release of the high-pressure openings (20, 22) and the low-pressure openings (21, 23) for admitting low-pressure gas from a low-pressure line (33) into the housing volume (16) in opposite directions through the first low-pressure opening (21) and the second low-pressure opening (23) and for discharging high-pressure gas in the form of compressed low-pressure gas from the first high-pressure opening (20) and from the second high-pressure opening (22) into a high-pressure line (32) in opposite directions during compression operation by means of the gas flow adjustment unit (29).

## Revendications

1. Boîtier de piston (10) pour une machine à piston rotatif (11) pour la régulation de différentes pressions de gaz dans un réseau de conduites de gaz (12), présentant une première partie de boîtier (13) avec un contour intérieur en forme de segment de cercle et une deuxième partie de boîtier (14) avec un contour intérieur en forme de segment de cercle, la première partie de boîtier (13) et la deuxième partie de boîtier (14) formant ensemble une paroi intérieure de boîtier (15) avec un contour intérieur de boîtier en forme de trochoïde pour définir un volume de boîtier (16) pour un piston rotatif triangulaire (25) de la machine à piston rotatif (11) pouvant tourner dans celui-ci,
**caractérisé en ce que**
sur la première partie de boîtier (13) sont configurés un premier orifice haute pression (20) pour l'admission de gaz haute pression dans le volume de boîtier (16) ainsi que pour l'évacuation de gaz haute pression hors du volume de boîtier (16) et un premier orifice basse pression (21) pour l'admission de gaz basse pression dans le volume de boîtier (16) ainsi que pour l'évacuation de gaz basse pression hors du volume de boîtier (16), et **en ce que** sur la deuxième partie de boîtier (14) sont configurés un deuxième orifice haute pression (22) pour l'admission de gaz haute pression dans le volume de boîtier (16) ainsi que pour l'évacuation de gaz haute pression hors du volume de boîtier (16) et un deuxième orifice basse pression (23) pour l'admission de gaz basse pression dans le volume de boîtier (16) ainsi que pour l'évacuation de gaz basse pression hors du volume de boîtier (16), dans lequel le premier orifice haute pression (20) et le deuxième orifice haute pression (22) sont configurés pour faire entrer le gaz haute pression dans le volume de boîtier (16) en sens inverse, et le premier orifice de gaz basse pression (21) et le deuxième orifice basse pression (23) sont configurés pour faire entrer le gaz basse pression dans le volume de boîtier (16) en sens inverse.

2. Boîtier de piston (10) selon la revendication 1,
**caractérisé en ce que**
le contour intérieur en forme de segment de cercle de la première partie de boîtier (13) présente un premier centre (17), le contour intérieur en forme de segment de cercle de la deuxième partie de boîtier (14) présente un deuxième centre (18) et le contour intérieur de boîtier en forme de trochoïde présente un centre principal (19), le premièr orifice haute pression (20) présentant une excentricité par rapport au premier centre (17) en direction du centre principal (19), le premier orifice basse pression (21) présente une excentricité par rapport au premier centre (17) dans une direction s'éloignant du centre principal (19), le deuxième orifice haute pression (22) présente une excentricité par rapport au deuxième centre (18) dans la direction du centre principal (19), et/ou le deuxième orifice basse pression (23) présente une excentricité par rapport au deuxième centre (18) dans une direction s'éloignant du centre principal (19).

3. Boîtier de piston (10) selon l'une des revendications précédentes,
**caractérisé en ce que**
la section transversale des orifices haute pression (20, 22) est respectivement plus petite que la section transversale des orifices basse pression (21, 23).

4. Machine à piston rotatif (11) pour réguler différentes pressions de gaz dans un réseau de conduites de gaz (12) par un mode de compression pour comprimer du gaz à basse pression en gaz à haute pression et par un mode de détente pour dilater du gaz à haute pression en gaz à basse pression, comprenant un piston rotatif triangulaire (25), un arbre excentrique (26) avec un excentrique (27) et un boîtier de piston (10) selon l'une des revendications précédentes, dans lequel le piston rotatif (25) est positionné de manière rotative dans le volume de boîtier (16) sur l'excentrique (27).

5. Machine à piston rotatif (11) selon la revendication 4,
**caractérisé en ce que**
le piston rotatif (25) présente trois coins de piston (28) et entre deux coins de piston (28) une largeur de piston, une excentricité (30) de l'excentrique (27) par rapport à l'arbre d'excentrique (26) présentant une mesure dans une plage entre 5 % et 15 % de la largeur de piston et/ou dans une plage entre 20 mm et 30 mm.

6. Machine à piston rotatif (11) selon l'une des revendications 4 à 5,
**caractérisé par**
une unité de réglage de débit de gaz (29) pour libérer les orifices haute pression (20, 22) et les orifices basse pression (21, 23) pour l'admission en sens inverse de gaz haute pression à partir d'une conduite haute pression (32) dans le volume du boîtier (16) à travers le premièr orifice haute pression (20) et à travers le deuxième orifice haute pression (22), pour évacuer en sens inverse du gaz basse pression sous forme de gaz haute pression expansé par le premier orifice basse pression (21) et par le deuxième orifice basse pression (23) dans une conduite basse pression (33) pendant l'opération d'expansion, pour l'admission en sens inverse de gaz basse pression à partir d'une conduite basse pression (33) dans le volume du boîtier (26) à travers le premier orifice basse pression (21) et le deuxième orifice basse pression (23), et/ou pour l'évacuation en sens inverse de gaz haute pression sous forme de gaz basse pression comprimé à partir du premier orifice haute pression (20) et à partir du deuxième orifice haute pression (22) dans une conduite haute pression (32) pendant le fonctionnement en compression.

7. Machine à piston rotatif (11) selon l'une des revendications 4 à 6,
**caractérisé par**
un premier agencement de composants, qui présente le piston rotatif triangulaire (25), l'excentrique (27) et le boîtier de piston (10), le piston rotatif (25) étant positionné de manière rotative dans le volume de boîtier (16) sur l'excentrique (27), et un deuxième agencement de composants, qui présente un deuxième piston rotatif triangulaire (35), un deuxième excentrique (37) de l'arbre d'excentrique (26) et un deuxième boîtier de piston (10), piston (34) correspondant au premier boîtier de piston (10), le deuxième piston rotatif (35) étant positionné de manière rotative dans un deuxième volume de boîtier (36) du deuxième boîtier de piston (34) sur le deuxième excentrique (37), et le premier ensemble de composants étant disposé dans un sens de rotation de l'arbre excentrique (26) tourné de 180° par rapport au deuxième ensemble de composants.

8. Machine à piston rotatif (11) selon la revendication 7,
**caractérisé par**
une plaque de recouvrement (38) pour fermer au moins une ouverture latérale du premier boîtier de piston (10) et/ou une ouverture latérale du deuxième boîtier de piston (34) ainsi que pour espacer le premier boîtier de piston (10) et le deuxième boîtier de piston (34) l'un de l'autre.

9. Machine à piston rotatif (11) selon l'une des revendications 4 à 8,
**caractérisé par**
un moteur/générateur (39) pour faire tourner l'arbre excentrique (26) en mode de compression comme moteur dans une première direction et pour faire tourner l'arbre excentrique (26) en mode d'expansion comme générateur dans une deuxième direction opposée à la première direction.

10. Système de régulation de pression de gaz (100) destiné à être utilisé dans un réseau de conduites de gaz (12) pour réguler différentes pressions de gaz dans le réseau de conduites de gaz (12), comprenant une conduite haute pression (32) pour acheminer le gaz haute pression, une conduite basse pression (33) pour acheminer le gaz basse pression, et une machine à piston rotatif (11) selon l'une quelconque des revendications 4 à 9 pour comprimer le gaz basse pression provenant de la conduite basse pression (33) en gaz haute pression pour la conduite haute pression (32) en mode compression et pour détendre le gaz haute pression provenant de la conduite haute pression (32) en gaz basse pression pour la conduite basse pression (33) en mode détente.

11. Procédé de fonctionnement d'un système de régulation de pression de gaz (100) selon la revendication 10, comprenant les étapes:
- Libérer les orifices haute pression (20, 22) et les orifices basse pression (21, 23) pour l'admission en sens inverse de gaz à haute pression à partir d'une conduite à haute pression (32) dans le volume de boîtier (16) à travers le premier orifice haute pression (20) et à travers le deuxième orifice haute pression (22) et pour l'évacuation en sens inverse de gaz à basse pression sous forme de gaz à haute pression expansé à partir du premier orifice basse pression (21) et à partir du deuxième orifice basse pression (23) dans une conduite à basse pression (33) pendant l'opération d'expansion au moyen de l'unité de réglage de débit de gaz (29) ou
- Libérer les orifices haute pression (20, 22) et les orifices basse pression (21, 23) pour faire entrer en sens inverse du gaz à basse pression provenant d'une conduite à basse pression (33) dans le volume du boîtier (16) à travers le premier orifice basse pression (21) et le deuxième orifice basse pression (23), et pour faire sortir en sens inverse du gaz à haute pression sous forme de gaz à basse pression comprimé du premier orifice haute pression (20) et du deuxième orifice haute pression (22) dans une conduite à haute pression (32) pendant l'opération de compression au moyen de l'unité de réglage du débit de gaz (29).
